# EUROPÄISCHE PATENTSCHRIFT

(11) **EP 0 629 548 B1**
(45) Veröffentlichungstag und Bekanntmachung des Hinweises auf die Patenterteilung: **04.09.1996**
(21) Anmeldenummer: 94107039.3
(22) Anmeldetag: 05.05.1994
(51) Int. Cl.: B64D 13/06

(54) **Anordnung zur Energiegewinnung an Bord eines Flugzeuges, insbesondere eines Passagierflugzeuges**
Device to recover energy for an aircraft, in particular passenger aircraft
Dispositif de récupération d'énergie à bord d'un avion, en particulier un avion de passagers

(30) Priorität: 18.06.1993 DE 4320302
(43) Veröffentlichungstag der Anmeldung: 21.12.1994
(73) Patentinhaber: Daimler-Benz Aerospace Airbus Gesellschaft mit beschränkter Haftung, D-21129 Hamburg (DE)
(72) Erfinder: Asshauer, Hartwig, D-21073 Hamburg (DE)
(74) Vertreter: Hansmann, Dierk, Dipl.-Ing.

(56) Entgegenhaltungen:
- DE-A- 3 801 042
- US-A- 2 734 443
- US-A- 2 777 301
- US-A- 2 851 254
- US-A- 3 369 777
- US-A- 4 419 926

## Beschreibung

Die Erfindung betrifft eine Anordnung zur Energiegewinnung an Bord eines Flugzeuges, insbesondere eines Passagierflugzeuges, mit einer Kabinenabluftleitung, in der ein Kabinenabluftstrom strömt, die einerseits mit einer Druckkabine im Flugzeug und andererseits mit der Flugzeugumgebung verbunden ist, mit einer triebwerksseitigen Zapfluftentnahme, die über eine Zapfluftleitung mit einer Klimaanlage verbunden ist und die Triebwerkszapfluft für deren weitere Nutzung in der Klimaanlage geeignet ist, mit einer Wärmetauscheinrichtung, die so zwischen Kabinenabluftleitung und Zapfluftleitung angeordnet ist, daß der Kabinenabluftstrom vor dem Eintritt in die Wärmetauscheinrichtung eine geringe Temperatur und die Triebwerkszapfluft eine hohe Temperatur besitzt, um die Triebwerkszapfluft vor Eintritt in die Klimaanlage abzukühlen, und mit einer Energiewandeleinheit an die mindestens ein Verbraucher angeschlossen ist.

Aus dem Dokumment US-A-4 419 926 ist ein solches System bekannt. Hierbei wird Kabinenabluft in einer als Abluftturbine ausgebildeten Energiewandeleinheit entspannt. Die in der Abluftturbine entspannte Kabinenabluft wird in einer Wärmetauscheinrichtung dazu verwendet, komprimierte Frischluft (Zapfluft) zu köhlen. Die Frischluft wird nach dieser Vorkühlung der Klimaanlage zur Verfügung gestellt. Die aus der Wärmetauscheinrichtung austretende aufgewärmte Kabinenabluft wird ungenutzt an die Flugzeugumgebung abgegeben.

Aus dem Dokument US-A 2 777 301 ist ein weiteres Klimassystem bekannt, in dem mittels eines Wärmetauschers ein "Vorwärmen" von Kabinenabluft realisiert wird. Die hauptsächliche Erwärmung der Luft wir in einer Brennkammer durch Verbrennen von Treibstoff erreicht. Damit ist eine zusätzliche Energiezufuhr notwendig, um einen elektrischen Generator oder einen Kompressor zu betreiben, der dann komprimierte Frischluft zur Verfügung stellt.
Weiterhin ist aus US-A-3 369 777 bekannt, daß Kabinenabluft ebenfalls in einer Abluftturbine entspannt wird und die gewonnene Energie für das Betreiben eines Fanrades dient, welches den Antrieb in einem Umluftkreis zum Kühlen der Kabinenwände dient. Danach durchströmt die entspannte Kabinenabluft als Kühlmedium einen Wärmetauscher, der dem Umluftkreis als Temperatursenke dient, bevor die Kabinenabluft in die Flugzeugumgebung austritt. Da die Energie des Volumenstromes der Kabinenabluft aber nur gering ist, kann die Leistung einer Abluftturbine nur entprechend niedrig sein.

Demgemäß liegt der Erfindung die Aufgabe zugrunde, eine Anordnung der einleitend genannten Art derart auszubilden, daß die Lufttemperatur der Kabinenabluft wirkungsvoll erhöht wird, um eine wesentlich höhere Leistung einer Energiewandeleinheit zu erreichen und damit den Gesamtwirkungsgrad des Flugzeuges zu verbessern.

Diese Aufgabe ist bei gattungsgemäßen Anordnung dadurch gelöst, daß in der Wärmetauscheinrichtung die Abwärrne der Triebwerkszapfluft für eine Energieerhöhung der Kabinenabluft vorgesehen ist zur Schaffung einer energieangereicherten Kabinenabluft und daß nach dem Austritt aus der Wärmetauscheinrichtung die Energiewandeleinheit innerhalb der Kabinenabluftleitung angeordnet ist, die die energieangereicherte Kabinenabluft nutzbar macht.

Hierbei ist insbesondere vorteilhaft, daß die von der Triebwerkszapfluft an die Kabinenabluft abgegebene Wärmeenergie nutzbar gemacht wird und nicht ungenutzt als Abwärme an die Flugzeugumgebung abgegeben wird. Die Energie des Volumenstromes der Kabinenabluft wird damit wirkungsvoll erhöht, was zu einer wesentlichen Leistungssteigerung der nach der Wärmetauscheinrichtung angeordneten Energiewandeleinheit führt. Der Gesamtwirkungsgrad des Flugzeuges wird somit wirkungsvoll erhöht.

Vorteilhaft ist weiterhin, daß durch das Abkühlen der Triebwerkszapfluft in der Wärmetauscheirrichtung die Temperatur der Zapfluft am Eintritt in den Kühler der Klimaanlage reduziert ist. Die Kühler der Klimaanlage können somit entlastet werden.

Vorteilhafte Weiterbildungen sind in den Unteransprüchen 2 und 3 angegeben.

Mit der Ausbildung gemäß Anspruch 2 kann nach Bedarf den Verbrauchern elektrische, pneumatische oder mechanische Energie zugeführt werden.

Mit der Ausbildung der Energiewandeleinheit gemäß Anspruch 6 ist die Erhöhung der Energie der Kabinenabluft in eine Steigerung des Vortriebes umsetzbar.

Die Erfindung wird nachstehend anhand von Ausführungsbeispielen, die in den Figuren 1 - 4 dargestellt sind, näher erläutert.

Es zeigen
- Fig. 1: die schematische Darstellung einer ersten Ausführungsform der Anordnung zur Energiegewinnung an Bord eines Flugzeuges,
- Fig. 2: die schematische Darstellung einer zweiten Ausführungsform der Anordnung zur Energiegewinnung an Bord eines Flugzeuges,
- Fig. 3: die schematische Darstellung einer dritten Ausführungsform der Anordnung zur Energiegewinnung an Bord eines Flugzeuges und
- Fig. 4: die schematische Darstellung einer vierten Ausführungsform der Anordnung zur Energiegewinnung an Bord eines Flugzeuges.

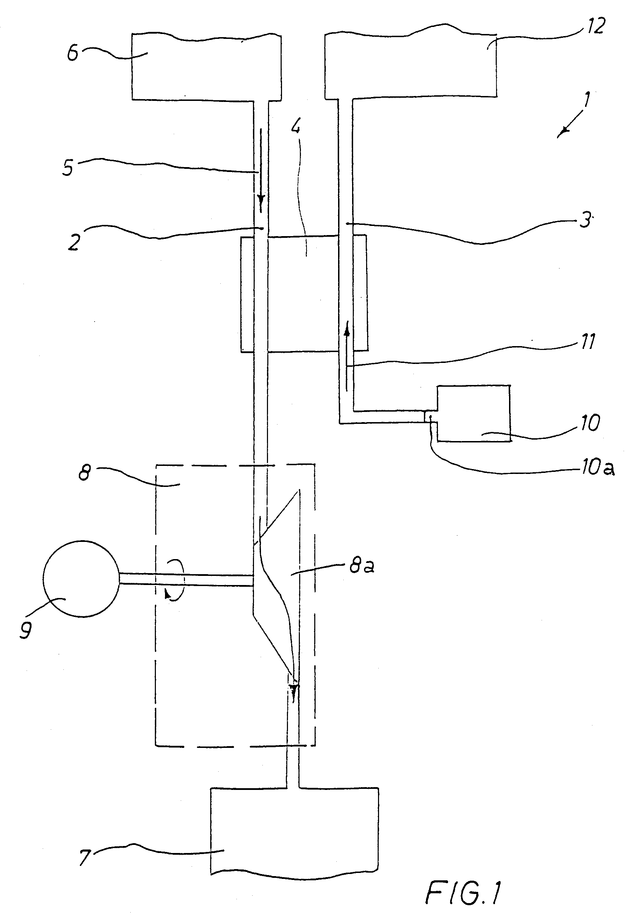

In Fig. 1 ist eine erste Ausführungsform einer Anordnung 1 zur Energiegewinnung an Bord eines Flugzeuges schematisch dargestellt. Eine Energiewandeleinheit 8 ist mit einer Kabinenabluftleitung 2 verbunden und eine Zapfluftentnahme 10a von Zapfluft 11 aus einem Triebwerk 10 für deren Nutzung in einer Klimaanlage 12 ist über eine Zapfluftleitung 3 mit der Klimaanlage 12 verbunden. Zwischen der Kabinenabluftleitung 2 im Bereich vor dem Eintritt in die Energiewandeleinheit 8 und der Zapfluftleitung 3 ist an geeigneter Stelle eine Wärmetauscheinrichtung 4 angeordnet.
Diese erfindungsgemäße Anordnung ist im wesentlichen in den Ausführungsformen gemäß Fign. 1 bis 4 etwa in gleicher Weise ausgeführt.
Die Energiewandeleinheit 8 dient in der ersten Ausführungsform der erfindungsgemäßen Anordnung 1 im wesentlichen zur Bereitstellung von technischer Arbeit. Diese wird mittels einer Abluftturbine 8a unter Ausnutzung der vorhandenen Druckdifferenz zwischen dem Druck der Kabinenabluft 5, die aus einem Druckrumpf 6 geleitet wird, und dem Luftdruck der Flugzeugumgebung 7 während eines Fluges durch das Entspannen der Kabinenabluft 5 erzeugt. Die am Abtrieb der Abluftturbine 8a zur Verfügung stehende mechanische Wellenleistung ist als Antrieb für mindestens eine Maschine 9, beispielsweise eines Generators oder Gebläses einsetzbar. Somit kann für entsprechende Verbraucher diese mechanische Wellenleistung mit üblicherweise bekannten Mitteln zur Energieumwandlung in elektrische, pneumatische oder mechanische Energie gewandelt werden und ihnen zugeführt werden.
Die Kabinenabluftleitung 2 und die Zapfluftleitung 3 sind über eine Wärmetauscheinrichtung 4 miteinander gekoppelt, in der die Zapfluft 11 und die Kabinenabluft 5 aneinander vorbeiströmen und somit zumindest ein Teil der vorhandenen Wärmeenergie der Zapfluft 11 entzogen und auf die Kabinenabluft 5 übertragen wird. Damit steigt die Temperatur der Kabinenabluft 5 und der Gewinn an technischer Arbeit. Gleichzeitig kann durch das Abkühlen der Zapfluft 11 in der Wärmetauscheinrichtung 4 eine Vorkühlung der Zapfluft 11 am Triebwerk 10 entfallen. Ein weiterer Vorteil ergibt sich dadurch, daß durch das Reduzieren der Temperatur der Zapfluft 11 am Eintritt in die nicht dargestellten Kühler der Klimaanlage 12 entlastet werden, was eine Steigerung der Kühlleistung der Klimaanlage bedeutet.

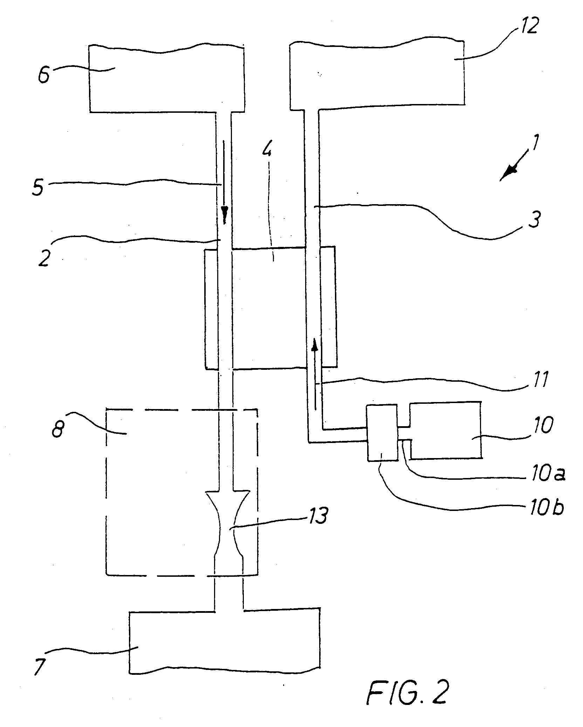

In der Fig. 2 ist schematisch eine zweite Ausführungsform der Anordnung 1 zur Energiegewinnung an Bord eines Flugzeuges dargestellt, in der zwischen der Kabinenabluftleitung 2 und der Zapfluftleitung 3 die Wärmetauscheinrichtung 4 angeordnet ist. Die triebwerksseitige Zapfluftentnahme 10a ist mit einer Vorkühleinrichtung 10b verbunden und die Vorkühleinrichtung 10b ist über die Zapfluftleitung 3 mit der Klimaanlage 12 verbunden.
In dieser Ausführungsform, in der die Energiewandeleinheit 8 im wesentlichen aus einer Schubdüse 13 besteht, die auch gleichzeitig den Verbraucher 9 darstellt, dient das Abgeben der Wärmeenergie von der Zapfluft 11 an die Kabinenabluft 5 zur Erhöhung des Volumenstromes der Kabinenabluft 5, wobei die Druckdifferenz zwischen der Kabinenabluft 5 und der Flugzeugumgebung 7 als zusätzlicher Schub genutzt wird. Durch die Erhöhung der Energie der Kabinenabluft 5 ist eine Steigerung des Vortriebes erreichbar. Die Vorkühleinrichtung 10b der Zapfluft dient im wesentlichen zum Abkühlen der aus dem Triebwerk 10 über die Zapfluftentnahme 10a entnommenen Zapfluft 11, die dann über die Zapfluftleitung 3 in die Klimaanlage 12 des Flugzeuges eingespeist wird. Die Zapfluft 11 wird üblicherweise über die Vorkühleinrichtung 10b am Triebwerk 10 und im weiteren über in der Figur nicht dargestellte Kühler der Klimaanlage 12 auf die benötigter Temperatur abgekühlt. Durch den Einsatz der Wärmetauscheinrichtung 4 wird die Vorkühleinrichtung 10b der Zapfluft 11 entlastet. Durch eine geschickte Anordnung der Wärmetauscheinrichtung 4 zwischen der Abluftleitung 2 und Zapfluftleitung 3 kann diese Vorkühlung der Zapfluft 11 zumindest minimiert werden oder sogar völlig wegfallen.

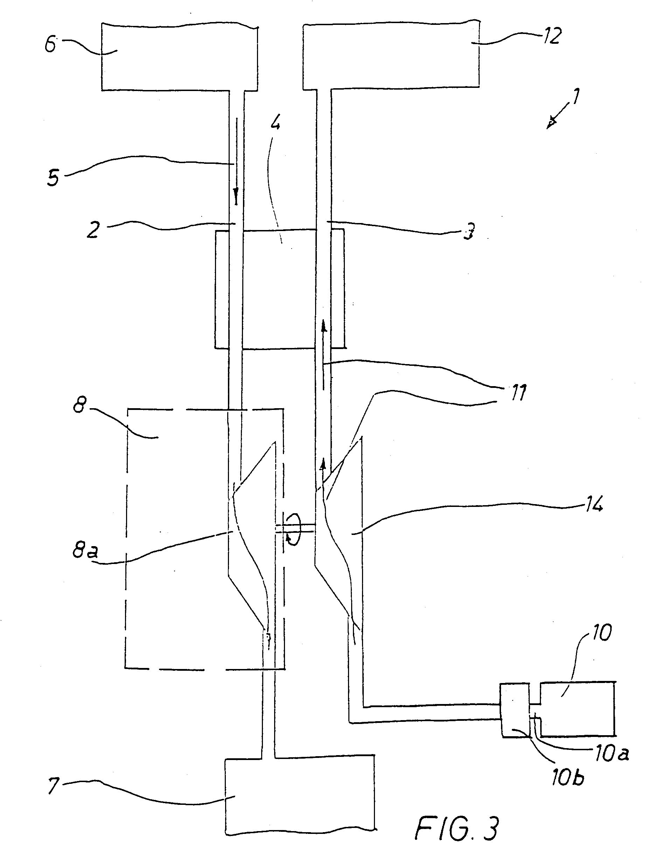

In Fig. 3 ist schematisch eine dritte Ausführungsform der erfindungsgemäßen Anordnung 1 dargestellt. Neben den in Fig. 1 dargestellten wesentlichen erfindungsgemäßen Merkmalen ist innerhalb der Zapfluftleitung 3 ein Kompressor 14 angeordnet, wobei der am Abtrieb der Abluftturbine 8a angekoppelte Kompressor 14 an seinem Eintritt mit der triebwerksseitigen Zapfluftentnahme vorzugsweise über die Vorkühleinrichtung 10b verbunden ist und an seinem Austritt mit der Zapfluftleitung 3 verbunden ist.
In dieser dritten Ausgestaltungsform wird die an der Abluftturbine 8a entstehende mechanische Wellenleistung nicht für einen externen, d. h. außerhalb der Anordnung 1 existierenden Verbraucher, sondern über den Kompressor 14 für die Erhöhung des Druckpotentials der Zapfluft 11 genutzt. Damit wird der Entnahmedruck der benötigten Zapfluft 11 an der Zapfluftentnahme 10a reduziert, was zu einer Verbesserung des Wirkungsgrades des Triebwerkes führt. Beispielsweise wird der Treibstoffverbrauch des Triebwerkes gesenkt, da sich die notwendige Kompressionsarbeit des Triebwerkes 10 verringert.

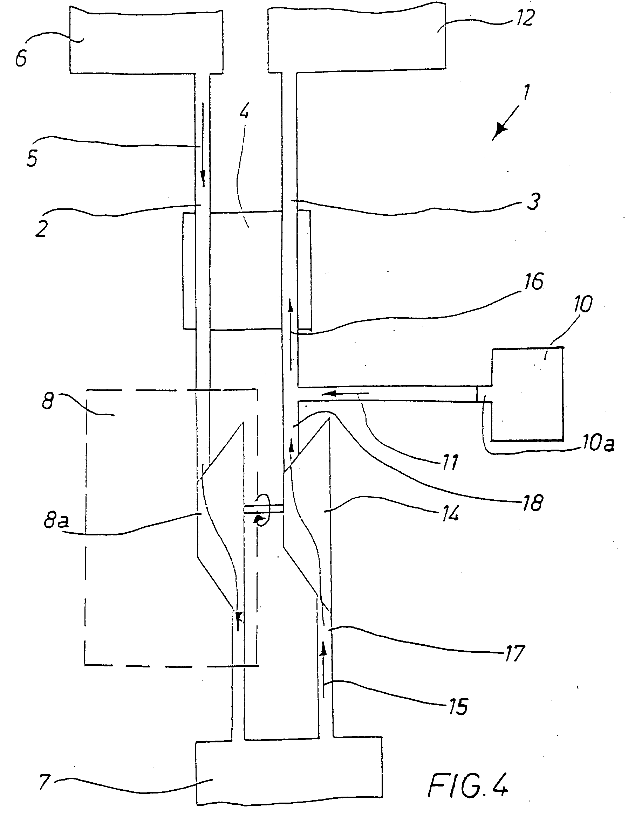

Eine vierte Ausgestaltungsform der erfindungsgemäßen Anordnung 1 ist schematisch in Fig. 4 dargestellt. Neben den in Fig. 1 dargestellten wesentlichen erfindungsgemäßen Merkmalen ist ein weiteres Merkmal ein Kompressor 14, der am Abtrieb der Abluftturbine 8a angekoppelt ist, der an seinem Eintritt mit der Flugzeugumgebung 7 über eine Außenluftleitung 17 verbunden ist und der an seinem Austritt mit der Zapfluftleitung 3 über eine Anschlußleitung 18 verbunden ist.
In dieser vierten Ausgestaltungsform wird also die an der Abluftturbine 8a entstehende mechanische Wellenleistung nicht für einen externen, d. h. außerhalb der Anordnung 1 existierenden Verbraucher genutzt, sondern wird über den vorzugsweise mehrstufigen Kompressor 14 umgesetzt. Der Kompressor 14 verdichtet Umgebungsluft 15, die mit der Zapfluft 11 vermischt wird und als ein Gemisch 16 der Klimaanlage 12 zugeführt wird. Die Entnahmemenge der benötigten Zapfluft 11 an der Zapfluftentnahme 10a wird reduziert, was den Treibstoffverbrauch eines Triebwerkes verringert, da weniger Kompressionsarbeit geleistet werden muß und somit wird der Wirkungsgrad eines Triebwerkes positiv beeinflußt.

## Patentansprüche

1. Anordnung zur Energiegewinnung an Bord eines Flugzeuges, insbesondere eines Passagierflugzeuges, mit einer Kabinenabluftleitung (2), in der ein Kabinenabluftstrom (5) strömt, die einerseits mit einer Druckkabine (6) im Flugzeug und andererseits mit der Flugzeugumgebung (7) verbunden ist, mit einer triebwerksseitigen Zapfluftentnahme (10a), die über eine Zapfluftleitung (3) mit einer Klimaanlage (12) verbunden ist und die Triebwerkszapfluft (11) für deren weitere Nutzung in der Klimaanlage (12) geeignet ist, mit einer Wärmetauscheinrichtung (4), die so zwischen Kabinenabluftleitung (2) und Zapfluftleitung (3) angeordnet ist, daß der Kabinenabluftstrom (5) vor dem Eintritt in die Wärmetauscheinrichtung (4) eine geringe Temperatur und die Triebwerkszapfluft (11) eine hohe Temperatur besitzt, um die Triebwerkszapfluft (11) vor Eintritt in die Klimaanlage (12) abzukühlen, und mit einer Energiewandeleinheit (8) an die mindestens ein Verbraucher (9, 13, 14) angeschlossen ist, **dadurch gekennzeichnet, daß** in der Wärmetauscheinrichtung (4) die Abwärme der Triebwerkszapfluft (11) für eine Energieerhöhung der Kabinenabluft (5) vorgesehen ist zur Schaffung einer energieangereicherten Kabinenabluft (5) und daß nach dem Austritt aus der Wärmetauscheinrichtung (4) die Energiewandeleinheit (8) innerhalb der Kabinenabluftleitung (2) angeordnet ist, die die energieangereicherte Kabinenabluft (5) nutzbar macht.

2. Anordnung nach Anspruch 1,
**dadurch gekennzeichnet, daß**
die Energiewandeleinheit (8) im wesentlichen ausgebildet ist als eine mittels Kabinenabluft (5) angetriebene Turbine (8a), die am Abtrieb eine mechanische Wellenleistung zur Verfügung stellt.

3. Anordnung nach Anspruch 1,
**dadurch gekennzeichnet, daß**
die Energiewandeleinheit (4) und der Verbraucher eine Einheit bilden und im wesentlichen aus mindestens einer Schubdüse (13) oder mindestens einer Kabinenauslaßöffnung mit Düsenwirkung besteht, in der die Druckdifferenz zwischen Kabinenabluft (5) und Flugzeugumgebung (7) während des Fluges in Vortrieb umsetzbar ist.

## Claims

1. Arrangement for obtaining energy on board an aircraft, in particular a passenger aircraft, with a cabin outgoing air line (2) in which there flows a cabin outgoing air stream (5) which is connected, on the one hand, to a pressurized cabin (6) in the aircraft and on the other hand to the aircraft environment (7), with a tapped air bleeder (10a) on the engine side which is connected via a tapped air line (3) to air-conditioning equipment (12), and the engine tapped air (11) is suitable for further use thereof in the air-conditioning equipment (12), with a heat exchanger (4) which is arranged between cabin outgoing air line (2) and tapped air line (3) in such a way that the cabin outgoing air stream (5) has a low temperature before it enters the heat exchanger (4) and the engine tapped air (11) has a high temperature in order to cool the engine tapped air (11) before it enters the air-conditioning equipment (12), and with an energy converting unit (8) to which at least one consumer (9, 13, 14) is attached, characterized in that in the heat exchanger (4) the waste heat of the engine tapped air (11) is intended to increase the energy of the cabin outgoing air (5) to create cabin outgoing air (5) which is enriched in energy and in that after discharge from the heat exchanger (4), the energy converter (8) is arranged inside the cabin outgoing air line (2), making the cabin outgoing air (5) which is enriched in energy useful.

2. Arrangement according to claim 1, characterized in that the energy converter (8) is essentially designed as a turbine (8a) which is driven by cabin outgoing air (5) and provides a mechanical thrust horsepower at the output.

3. Arrangement according to claim 1, characterized in that the energy converter (4) and the consumer form a unit and consists essentially of at least one propelling nozzle (13) or at least one cabin outlet orifice with nozzle action in which the pressure difference between cabin outgoing air (5) and aircraft environment (7) can be converted into propulsion during the flight.

## Revendications

1. Dispositif destiné à produire de l'énergie à bord d'un avion, plus particulièrement d'un avion de passagers, pourvu d'une conduite d'évacuation d'air en cabine (2) dans laquelle s'écoule un courant d'évacuation d'air en cabine (5), reliée d'une part à une cabine étanche (6) de l'avion et d'autre part à l'environnement de l'avion (7), pourvu d'une prise d'air de distribution (10a) sur le côté latéral du bloc-moteur qui est connectée à une installation de conditionnement d'air (12) par l'intermédiaire d'une conduite d'air de distribution (3) et adaptée à l'air de distribution (11) du bloc-moteur pour l'utilisation de celui-ci dans l'installation de conditionnement d'air (12), d'une installation d'échange thermique (4) disposée de telle manière entre la conduite d'évacuation d'air (2) et la conduite d'air de distribution (3), que le courant d'évacuation d'air en cabine (5), avant d'entrer dans le dispositif d'échange thermique (4), possède une température réduite et l'air de distribution du bloc-moteur (11) une température élevée, permettant de refroidir l'air de distribution du bloc-moteur (11) avant son entrée dans l'installation de conditionnement d'air (12), et pourvu d'un convertisseur d'énergie (8) auquel est relié au moins un utilisateur (9, 13, 14), **caractérisé en ce que** dans le dispositif d'échange thermique (4), la chaleur perdue de l'air de distribution du bloc-moteur (11) est utilisée pour une augmentation d'énergie de l'air d'évacuation en cabine (5) afin de parvenir à un air d'évacuation en cabine (5) riche en énergie et en ce que le convertisseur d'énergie (8) est disposé à l'intérieur de la conduite d'évacuation d'air en cabine (2) après la sortie du dispositif d'échange thermique (4), ce qui rend exploitable l'air d'évacuation en cabine (5) enrichi en énergie.

2. Dispositif selon la revendication 1, **caractérisé en ce que** le convertisseur d'énergie (8) est conçu principalement comme une turbine (8a) entraînée par l'air d'évacuation en cabine (5) qui procure de la puissance mécanique à l'arbre de sortie.

3. Dispositif selon la revendication 1, **caractérisé en ce que** le convertisseur d'énergie (8) et l'utilisateur forment une unité qui se compose principalement au moins d'une tuyère d'éjection (13) ou au moins d'un orifice de sortie de cabine produisant l'effet d'une tuyère, dans lequel la différence de pression entre l'air d'évacuation en cabine (5) et l'environnement de l'avion (7) en cours de vol peut être convertie en poussée.
